# DEMANDE DE BREVET EUROPEEN

(11) **EP 0 951 081 A1**
(43) Date de publication de la demande: **20.10.1999**
(21) Numéro de dépôt: 99400887.8
(22) Date de dépôt: 12.04.1999
(51) Int. Cl.: H01M 2/16, H01M 6/18

(54) **Génerateur électrochimique avec un séparateur comprenant une matrice macroporeuse et un polymère poreux, et son procédé de fabrication**

(30) Priorité: 16.04.1998 FR 9804753
(71) Demandeur: ALCATEL, 75008 Paris (FR)
(72) Inventeur: Andrieu, Xavier, 91220 Bretigny sur Orge (FR); Boudin, Francois, 91290 Arpajon (FR); Jehoulet, Cristophe, 91220 Le Plessis Pate (FR)
(74) Mandataire: Doressamy, Clarisse

(57) **Abrégé**

L'invention concerne un générateur électrochimique, de type unitaire, comprenant un séparateur comprenant une matrice macroporeuse, du type feutre, dans les pores de laquelle est disposé un polymère microporeux, de type PVDF, ledit polymère microporeux ayant été disposé dans la matrice macroporeuse par imprégnation d'une solution comprenant le polymère dans la matrice. L'invention concerne aussi un procédé de préparation utilisant l'inversion de phase.

Enfin, l'invention concerne un procédé de préparation d'un générateur, de type unitaire, comprenant les étapes suivantes: on élabore une solution de collage comprenant un polymère, un solvant et un non-solvant; - on imprègne la matrice macroporeuse avec ladite solution; - on met en contact cette matrice macroporeuse imprégnée et les deux électrodes pour former un couple électrochimique; et - on sèche pour éliminer ledit solvant et ledit non-solvant.

## Description

La présente invention concerne un générateur électrochimique unitaire comprenant un séparateur comprenant une matrice macroporeuse et un polymère poreux et son procédé de fabrication.

Les générateurs traditionnels sont composés d'électrodes solides encadrant un séparateur contenant l'électrolyte liquide. Un séparateur peut être par exemple un corps macroporeux dans lequel l'électrolyte est imprégné. Un autre type de "séparateur" classique de nos jours est constitué d'un polymère (poreux ou non) gélifié du type polyfluorure de vinylidène, contenant l'électrolyte liquide.

Divers procédés de fabrication de ce type de générateur ont été proposés, parmi lesquels on peut citer ceux impliquant la fabrication séparée des électrodes et du séparateur, puis la réunion de ces différents éléments par diverses techniques. Parmi ces techniques, on peut citer le laminage (BellCore, US-A-5456000, US-A-5460904, US-A-5540741, US-A-5552239), et le collage (Electrofuels, US-A-5437692, US-A-5512389).

Par ailleurs, le document US-A-5639573 décrit un séparateur comprenant une structure support polymère multi-phase comprenant au moins une première phase poreuse et une seconde phase polymère dispersée dans les pores de ladite première phase poreuse. La phase polymère dispersée absorbe l'électrolyte organique; elle n'est pas poreuse.

Cependant, ces techniques ne donnent pas entière satisfaction car il se produit parfois un écrasement du séparateur, conduisant à des courts-circuits. L'assemblage nécessite aussi une manipulation prudente.

De plus, l'homme de l'art est toujours confronté au problème classique de la perte de propriétés mécaniques au détriment de propriétés de conductivité, et vice-versa.
L'invention a donc pour objet un nouveau générateur électrochimique unitaire comprenant un séparateur présentant une résistance mécanique à l'écrasement plus importante et permettant un assemblage aisé.

Ainsi, l'invention fournit un générateur électrochimique unitaire comprenant un séparateur comprenant une matrice macroporeuse dans les pores de laquelle est disposé un polymère microporeux, ledit polymère microporeux ayant été disposé dans la matrice macroporeuse par imprégnation dans la matrice d'une solution comprenant ledit polymère. Généralement le polymère microporeux ayant été ainsi disposé dans la matrice macroporeuse, de façon chimique par imprégnation, est gélifié une fois imprégné de l'électrolyte.
Avantageusement, le générateur selon l'invention comprend un séparateur de structure homogène, même en présence de quelques hétérogénéités locales, car il est préparé par réalisation chimique, par imprégnation de pratiquement toute la matrice macroporeuse par une solution comprenant le polymère microporeux. Ainsi, le séparateur du générateur selon l'invention est pratiquement unicouche.

Un autre avantage du générateur selon l'invention est que la porosité du séparateur compris dans ledit générateur est élevée, la porosité finale étant généralement comprise entre 35 et 90%, de façon préférée comprise entre 50 et 90%. Cela rend la fabrication dudit générateur, par les méthodes généralement utilisées qui seront explicités ci-après, plus facile. En particulier, la possibilité d'écrasement dudit séparateur pendant ladite fabrication, qui conduit à des courts-circuits indésirables, est fortement diminuée voire pratiquement éliminée.

Le polymère microporeux comprend typiquement un volume poreux compris entre 35 et 95%. Il présente typiquement des pores dont le diamètre moyen est compris entre 0,1 et 5µm, en général de l'ordre de 1 µm.

Le polymère microporeux peut être choisi parmi le polyfluorure de vinylidène (PVDF), le polychlorure de vinyle (PVC), le polyméthylméthacrylate (PMMA), le polybutylméthacrylate (PBMA), le polyacrylonitrile (PAN), le polvinylformal, le polyacétate de cellulose, une polysulfone, un polyéther, une polyoléfine telle que polyéthylène (PE), polyéthylèneoxyde (PEO), polypropylène (PP), leurs copolymères, les copolymères de polyfluorure de vinylidène et de polytétrafluorure d'éthylène et les copolymères de polyfluorure de vinylidène et de polyhexafluorure d'hexène, les copolymères de polyvinylacétate et de polyvinylalcool, ainsi que leurs alliages, et les alliages du polyfluorure de vinylidène avec un polymère choisi parmi une polysulfone, le polyméthylméthacrylate et la polyvinylpyrrolidone.

Avantageusement, ce polymère microporeux est le polyfluorure de vinylidène, un copolymère de celui-ci ou un alliage de celui-ci.

La matrice macroporeuse est "imprégnée" du polymère microporeux. Cette matrice pour le polymère microporeux est sensiblement rigide. La matrice macroporeuse comprend typiquement un volume poreux initial compris entre 35 et 95%. Elle présente typiquement des pores dont le diamètre moyen est compris entre 5 et 50µm, en général de l'ordre de 10µm.

Cette matrice macroporeuse peut être choisie par exemple parmi les feutres de matière organique ou inorganique, notamment polymère, les séparateurs tissés, des matériaux macroporeux obtenus par des procédés tels que l'inversion de phase ou par des moyens mécaniques. Une matrice préférée est un feutre polymère, formé d'une étoffe tissée ou non-tissée, définissant des interstices (ou pores) entre les fibres. Ce feutre peut être en une polyoléfine (PE, PP ou autre) ou en polyamide ou tout autre matériau.

Les pores ou interstices de la matrice et du polymère présentent des diamètres moyens qui permettent au polymère d'être présent dans les pores ou interstices de la matrice. En général, le ratio diamètre moyen de pore de la matrice macroporeuse sur diamètre moyen de pore du polymère microporeux est compris entre 2 et 50, classiquement ce ratio est de l'ordre de 10.

Le polymère peut comprendre aussi un élastomère (qui peut même le remplacer dans sa totalité dans certains cas) ainsi qu'éventuellement aussi un composé inorganique.

L'élastomère peut être un polyuréthane, un copolymère acrylonitrile/butadiène, un copolymère styrène/budatiène/ styrène, un copolymère styrène/isoprène/styrène, un polyester ou polyéther à blocs amide, etc. L'élastomère peut être présent selon diverses quantités. Le composé inorganique peut être de la silice.

L'épaisseur du séparateur selon l'invention est classique et peut être comprise entre 10 et 100µm.

Selon un mode de réalisation de l'invention, le séparateur a été réalisé selon un mode de préparation qui comprend la formation in situ du polymère microporeux dans les pores de la matrice macroporeuse.

Tous les procédés classiques de formation in situ du polymère microporeux dans les pores de la matrice macroporeuse sont appropriés ; on peut par exemple utiliser une solution du polymère dans un solvant avec un agent plastifiant, puis évaporation du solvant et extraction du plastifiant.

De préférence, le polymère microporeux est préparé à l'aide de la technique d'inversion de phase.

Selon un premier mode de réalisation, dit "par immersion", le procédé de réalisation du séparateur du générateur selon l'invention comprend les étapes suivantes:
- on élabore une solution du polymère dissous dans un solvant, éventuellement avec des additifs;
- on imprègne la matrice macroporeuse avec ladite solution;
- on immerge ladite matrice imprégnée dans un non-solvant miscible avec ledit solvant; et
- on sèche pour éliminer ledit solvant et ledit non-solvant.

Selon un second mode de réalisation, dit "par évaporation", le procédé de réalisation du séparateur du générateur selon l'invention comprend les étapes suivantes:
- on élabore une solution du polymère dissous dans un solvant, éventuellement avec des additifs, solution qui comprend de plus un non-solvant miscible avec ledit solvant, dans une proportion insuffisante pour provoquer la précipitation du polymère;
- on imprègne la matrice macroporeuse avec ladite solution; et
- on sèche pour éliminer ledit solvant et ledit non-solvant.

L'imprégnation peut se faire en plongeant la matrice dans un bain, ou par enduction de celle-ci avec la solution, ou par tout autre procédé approprié. Les solutions peuvent éventuellement être chauffées avant imprégnation de la matrice macroporeuse.

On entend par "solvant" un solvant organique dans lequel le polymère (et éventuellement l'élastomère) se dissout sans difficulté à la température d'opération, et qui peut être facilement éliminé par chauffage à une température modérée. On entend par "non-solvant", un liquide dans lequel le polymère (et éventuellement l'élastomère) n'est pas soluble (non-solvant fort) ou bien très peu soluble (non-solvant faible) à la température d'opération.

Le point d'ébullition du solvant (et/ou sa volatilité) est de préférence inférieur au point d'ébullition (et/ou sa volatilité) du non-solvant. Ainsi, au cours du phénomène d'évaporation, la solution s'enrichit en non-solvant jusqu'à ce que la phase polymérique devienne insoluble dans la phase liquide et précipite. À titre d'exemple, le point d'ébullition du solvant est compris entre 40 et 800°C, tandis que celui du non-solvant est supérieur à 100°C.

L'homme du métier peut déterminer quels solvants et quels non-solvants sont les plus appropriés pour préparer les solutions.

Le polymère (avec éventuellement l'élastomère) est mis en solution dans le solvant (avec éventuellement le non-solvant). La concentration en polymère est un des paramètres qui conditionne la porosité finale. La concentration en polymère en poids est comprise de préférence entre 5 et 50%, avantageusement entre 10 et 25%.

On peut sécher la matrice imprégnée en deux étapes, tout d'abord à une température comprise par exemple entre 20 et 60°C, puis à une température comprise par exemple entre 80 et 140°C ou à une température unique, par exemple directement à une température comprise entre 80 et 140°C.

Une étape préalable d'application d'un agent mouillant, ainsi qu'une étape supplémentaire de réticulation du polymère peuvent être envisagées.

Le générateur électrochimique, unitaire selon l'invention comprend classiquement deux électrodes, une anode et une cathode, ces électrodes avantageusement poreuses (de 35 à 90% par exemple) comportant un matériau électrochimiquement actif, qui est classiquement maintenu dans une matrice ou liant, de préférence polymère. Ce polymère liant peut être choisi parmi les polymères précédemment cités, notamment le PVDF, ou un copolymère ou alliage de celui-ci, ainsi que les dérivés de cellulose (CMC, HPMC, HEC, HPC, etc.), l'acide polyacrylique, le polyacrylamide, les élastomères tels que NBR, SBR, etc.. Le procédé de fabrication de ces électrodes est classique; notamment l'électrode est fabriquée par dépôt d'une pâte sur un support approprié tel qu'un métal déployé, une grille, un feuillard ou une mousse métallique formant ainsi les collecteurs. Avantageusement, ces collecteurs sont perforés; les perforations favorisent l'évaporation des solvants lors de la mise en oeuvre du procédé de préparation préféré du générateur.

L'anode comprend avantageusement du carbone, tel que du carbone graphité, du graphite, du coke, du carbone vitreux, du noir de carbone, du charbon actif, susceptible d'intercaler et de désintercaler du lithium la plus souvent issu initialement de la cathode.

La cathode comprend avantageusement au moins un oxyde lithié d'un métal de transition, tel que les oxydes lithiés de vanadium, de manganèse, nickel et cobalt.

Le générateur électrochimique comprend aussi classiquement, comme électrolyte, un sel de lithium dissous dans un solvant organique.

Le solvant organique est en général un éther ou un ester et peut être choisi parmi les alkyl-carbonates, linéaires ou ramifiés tels que propylènecarbonate (PC), éthylènecarbonate (EC), butylènecarbonate (BC), diéthylecarbonate (DEC), diméthylecarbonate (DMC), leurs mélanges.

Le sel de lithium est en général un sel fluoré de lithium, et peut être par exemple choisi parmi le perchlorate de lithium LiClO₄, l'hexafluoroarsenate de lithium (LiAsF₆), l'hexafluorophosphate de lithium (LiPF₆), le tétrafluoroborate de lithium (LiBF₄), le trifluorométhanesulfonate de lithium (LiCF₃SO₃), le trifluorométhanesulfonimide de lithium (LiN(CF₃SO₂)₂ ou LiTFSI), et le trifluorométhanesulfoneméthide de lithium (LiC(CF₃SO₂)₂ ou LiTFSM). L'invention concerne aussi un procédé de préparation d'un générateur selon l'invention.

Il est possible d'assembler le présent générateur selon plusieurs procédés. Parmi ces procédés, on peut citer le laminage des divers constituants dudit générateur fabriqués au préalable et l'imprégnation avec l'électrolyte. Ladite étape de laminage est généralement suivie de ladite étape d'imprégnation, mais il est aussi possible de faire suivre ladite étape d'imprégnation de ladite étape de laminage. On pourrait aussi d'abord procéder à l'imprégnation avec l'électrolyte des divers constituants fabriqués au préalable, puis procéder au laminage. Les conditions de laminage sont connues de l'homme du métier. Selon le cas, on peut aussi prévoir une étape d'extraction d'un plastifiant, si nécessaire.

On peut utiliser un procédé comprenant une étape de collage; ce procédé comprend les étapes suivantes:
- on prépare un séparateur selon l'invention et deux électrodes;
- on procède à l'enduction d'au moins une face libre entre le séparateur et chaque électrode avec une solution de collage; et
- on met en contact le séparateur et les deux électrodes pour former un couple électrochimique.

L'étape de mise en contact peut être faite pour chaque électrode simultanément ou de façon séquentielle.

Avantageusement, la solution de collage est constituée d'une solution comprenant:
- un polymère, et éventuellement des additifs;
- un solvant dans lequel le polymère se dissout facilement à la température d'opération;
- un non-solvant miscible avec ledit solvant, qui ne dissout pas ou très peu le polymère à la température d'opération, dans une proportion insuffisante pour provoquer la précipitation du polymère.

Une fois la solution de collage enduite et les électrodes apposées sur le séparateur, une légère pression est appliquée, notamment pour uniformiser l'épaisseur du couple électrochimique, puis le solvant et le non-solvant sont évaporés.

La colle peut être à base d'un polymère quelconque, ou d'un polymère de même formule chimique que le polymère formant le liant (ou matrice) d'une électrode, avec éventuellement le matériau électrochimiquement actif de l'électrode, ou d'un polymère de même formule chimique que le polymère microporeux. De préférence, la colle est à base de ce dernier polymère, choisi dans le groupe cité plus haut.

Selon un mode de réalisation particulièrement préféré, le procédé de fabrication du générateur comprend la fabrication in situ du séparateur, la solution de collage étant aussi utilisée en même temps pour la fabrication du séparateur.

Ainsi, selon un mode de réalisation particulièrement préféré, le procédé de préparation du générateur selon l'invention comprend les étapes suivantes:
- on élabore une solution de collage constituée d'une solution comprenant: un polymère, et éventuellement des additifs; un solvant dans lequel le polymère se dissout facilement à la température d'opération; et un non-solvant miscible avec ledit solvant, qui ne dissout pas ou très peu le polymère à la température d'opération, dans une proportion insuffisante pour provoquer la précipitation du polymère;
- on imprègne la matrice macroporeuse avec ladite solution;
- on met en contact cette matrice macroporeuse imprégnée et les deux électrodes pour former un couple électrochimique; et
- on sèche pour éliminer ledit solvant et ledit non-solvant.

L'étape d'imprégnation de la matrice macroporeuse peut être effectuée:
- en plongeant la matrice dans un bain de ladite solution;
- par enduction de la matrice sur ses deux faces avec ladite solution;
- par enduction de la matrice sur une seule face avec ladite solution.

Dans le premier cas, la matrice imprégnée de la solution peut être accolée avec les deux électrodes simultanément ou séquentiellement; une pression (légère) est ensuite appliquée.

Dans le second cas, on peut procéder à l'enduction des deux faces simultanément ou séquentiellement et on accole les deux électrodes simultanément ou séquentiellement, respectivement; une pression (légère) est ensuite appliquée suffisamment pour que la solution pénètre sensiblement totalement dans la matrice à partir de ses deux faces.

Dans le troisième cas, on accole une électrode et la matrice, on procède à l'enduction sur la face libre, puis on accole la seconde électrode; une pression (légère) est ensuite appliquée suffisamment pour que la solution pénètre sensiblement totalement dans la matrice à partir de la face d'enduction.

Le procédé préféré de préparation du générateur selon l'invention de l'invention comprend les étapes suivantes:
- on élabore une solution de collage constituée d'une solution comprenant: un polymère, et éventuellement des additifs; un solvant dans lequel le polymère se dissout facilement à la température d'opération; et un non-solvant miscible avec ledit solvant, qui ne dissout pas ou très peu le polymère à la température d'opération, dans une proportion insuffisante pour provoquer la précipitation du polymère;
- on enduit la matrice macroporeuse avec ladite solution sur une ou ses deux faces;
- on met en contact cette matrice macroporeuse enduite et les deux électrodes pour former un couple électrochimique;
- on exerce une pression suffisante pour que la solution pénètre sensiblement totalement dans la matrice à partir de la ou des deux faces d'enduction; et
- on sèche pour éliminer ledit solvant et ledit non-solvant.

Une étape préalable d'application d'un agent mouillant, tel qu'un solvant organique volatil, ainsi qu'une étape supplémentaire de réticulation du polymère peuvent aussi être envisagées.

L'étape de séchage est mise en oeuvre comme ci-dessus pour le séparateur seul, par exemple à une température comprise par exemple entre 20 et 140°C (par exemple en deux étapes, tout d'abord à une température comprise par exemple entre 20 et 60°C, puis à une température comprise par exemple entre 80 et 140°C éventuellement sous vide). La durée de l'étape de séchage est suffisante pour assurer que la totalité des solvants a été éliminée.

Une étape de laminage peut aussi être prévue.

De préférence, la solution de collage est à base d'un polymère choisi parmi le polyfluorure de vinylidène (PVDF), le polychlorure de vinyle (PVC), le polyméthylméthacrylate (PMMA), le polybutylméthacrylate (PBMA), le polyacrylonitrile (PAN), le polvinylformal, le polyacétate de cellulose, une polysulfone, un polyéther, une polyoléfine telle que polyéthylène (PE), polyéthylèneoxyde (PEO), polypropylène (PP), leurs copolymères, les copolymères de polyfluorure de vinylidène et de polytétrafluorure d'éthylène et les copolymères de polyfluorure de vinylidène et de polyhexafluorure d'hexène, les copolymères de polyvinylacétate et de polyvinylalcool, ainsi que leurs alliages, et les alliages du polyfluorure de vinylidène avec un polymère choisi parmi une polysulfone, le polyméthylméthacrylate et la polyvinylpyrrolidone. Avantageusement cette colle est à base de polyfluorure de vinylidène, un copolymère de celui-ci ou un alliage de celui-ci.

Les termes de solvant et de non-solvant ont les significations données plus haut pour le procédé décrit pour la fabrication du séparateur. Notamment le point d'ébullition du solvant est compris entre 40 et 80°C, tandis que celui du non-solvant est supérieur à 100°C.

Comme précédemment, l'homme du métier peut déterminer quels solvants et quels non-solvants sont les plus appropriés pour préparer les solutions. À titre d'exemple, si le polymère est du PVDF ou un copolymère ou un alliage, le solvant est par exemple choisi parmi acétone et tétrahydrofuranne, tandis que le non-solvant est choisi parmi le butanol, le propanol et l'éthylèneglycol.

La solution de collage comprend le solvant et le non-solvant en des proportions variant, en poids, de 75/25 à 90/10; le polymère représente en général, en poids de 5 à 50%, de préférence de 10 à 25%, de la solution.

Pour la préparation de la solution de collage, on peut procéder comme suit: le polymère (avec éventuellement l'élastomère) qui formera le milieu microporeux est mis en solution dans le solvant, puis le non-solvant est ajouté; la température d'opération est ajustée de sorte à ce que la solution polymère/solvant/non-solvant soit homogène et stable. On peut chauffer si nécessaire.

Le procédé peut être mise en oeuvre, à l'exclusion de l'étape de séchage, à une température faible, comprise par exemple entre 15 et 500°C; par exemple celle-ci peut être la température ambiante.

À l'issue des étapes décrites ci-dessus, on obtient un couple électrochimique que l'on imprègne avec l'électrolyte organique pour obtenir le générateur final recherché.

Ce dernier procédé offre l'avantage d'une fabrication simple, avec un nombre d'étapes limitées, et conduit à des générateurs de type unitaire présentant de bonnes propriétés mécaniques et électriques.

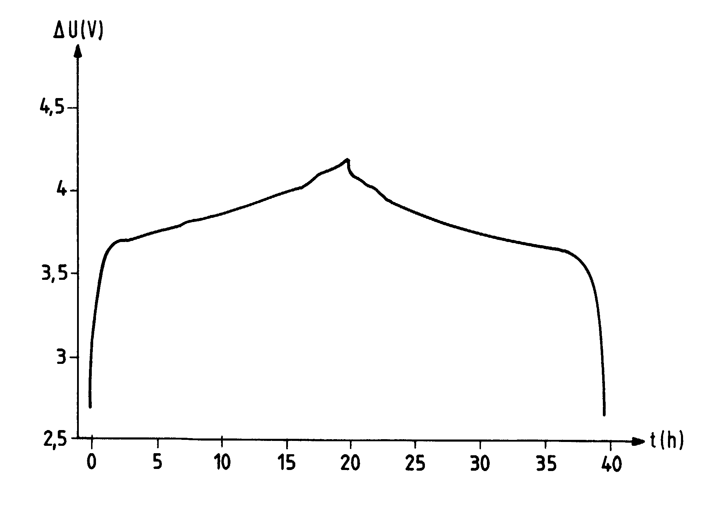

L'exemple suivant illustre l'invention sans la limiter, en référence à la figure 1.

La figure 1 représente l'évolution de la tension du générateur selon l'invention au cours d'un cyclage.

### Exemple 1.

L'anode est préparée à partir d'une pâte constituée de graphite comme matériau électrochimiquement actif dispersé dans un liant NBR/CMC (1/1). Cette électrode poreuse est disposée sur un collecteur en cuivre perforé.

La cathode est préparée à partir d'une pâte constituée de LiCoO₂ comme matériau électrochimiquement actif dispersé dans un liant PVDF. Cette électrode poreuse est disposée sur un collecteur en aluminium perforé.

On prépare un feutre polyoléfine Freudenberg®, d'épaisseur 60µm, de porosité 80% et de diamètre moyen de pore environ 8µm, que l'on dispose sur l'anode.

Par ailleurs, on prépare une solution (de collage) constituée, en poids, de 75% d'acétone, 12,5% de butanol et 12,5% de PVDF. Cette solution est obtenue en dissolvant le PVDF dans l'acétone puis en ajoutant le butanol. Le PVDF ainsi obtenu présente une porosité de 70% et un diamètre moyen de pore de 0,5 à 1µm.

On procède à l'enduction du feutre disposé sur l'anode, ces éléments s'imprégnant de cette solution, puis on recouvre avec la cathode. On effectue un léger pressage, de sorte que la solution de collage imprègne le feutre et les faces des deux électrodes.

Sous une pression de 1kg/cm², on procède ensuite à l'évaporation des solvants à une température de 25°C pendant 2hrs, puis sous vide à 120°C pendant 12hrs pour obtenir un couple électrochimique dont le séparateur présente une porosité d'environ 56%.

On imprègne ensuite avec un électrolyte composé d'une solution 1M de LiPF₆ dans un mélange PC/EC/DMC (1/1/3). Ce couple électrochimique imprégné est monté en cellule bouton.

On obtient finalement un générateur unitaire, de surface 40cm², de capacité nominale 110 mAh et d'épaisseur 0,3mm.

Ce générateur est cyclé en charge et en décharge à C/20, avec tout d'abord deux cycles de formation à 60°C.

La figure 1 représente un cycle charge puis décharge à l'ambiante, la tension du générateur en volts ΔU (V) étant en ordonnée et le temps en heures t (h) en abscisse.

L'invention n'est pas limitée aux modes de réalisation décrits mais est susceptible de nombreuses variations aisément accessibles à l'homme de l'art; notamment l'invention n'est pas limitée aux générateurs de format bouton mais tout type de générateur est envisageable, notamment prismatique, cylindrique, spiralé, etc. De même on pourra utiliser pour la préparation des électrodes tout matériau électrochimiquement actif et tout liant polymère connus.

## Revendications

1. Générateur électrochimique unitaire comprenant un séparateur comprenant une matrice macroporeuse dans les pores de laquelle est disposé un polymère microporeux, ledit polymère microporeux ayant été disposé dans la matrice macroporeuse par imprégnation dans la matrice d'une solution comprenant le polymère.

2. Générateur selon la revendication 1, dans lequel le polymère microporeux comprend un volume poreux compris entre 35 et 95%.

3. Générateur selon la revendication 1 ou 2, dans lequel le polymère microporeux comprend des pores dont le diamètre moyen est compris entre 0,1 et 5µm.

4. Générateur selon l'une quelconque des revendications 1 à 3, dans lequel le polymère microporeux est choisi parmi le polyfluorure de vinylidène, le polychlorure de vinyle, le polyméthylméthacrylate, le polybutylméthacrylate, le polyacrylonitrile, le polvinylformal, le polyacétate de cellulose, une polysulfone, un polyéther, une polyoléfine, leurs copolymères, les copolymères de polyfluorure de vinylidène et de polytétrafluorure d'éthylène et les copolymères de polyfluorure de vinylidène et de polyhexafluorure d'hexène, les copolymères de polyvinylacétate et de polyvinylalcool, ainsi que leurs alliages, et les alliages du polyfluorure de vinylidène avec un polymère choisi parmi une polysulfone, le polyméthylméthacrylate et la polyvinylpyrrolidone.

5. Générateur selon la revendication 4, dans lequel le polymère microporeux est le polyfluorure de vinylidène, un copolymère de celui-ci ou un alliage de celui-ci.

6. Générateur selon l'une quelconque des revendications 1 à 5, dans lequel la matrice macroporeuse comprend un volume poreux initial compris entre 35 et 95%.

7. Générateur selon l'une quelconque des revendications 1 à 6, dans lequel la matrice macroporeuse comprend des pores dont le diamètre moyen est compris entre 5 et 50µm.

8. Générateur selon l'une quelconque des revendications 1 à 7, dans lequel la matrice macroporeuse est choisie parmi: les feutres de matière organique ou inorganique, les séparateurs tissés, des matériaux macroporeux obtenus par des procédés tels que l'inversion de phase ou par des moyens mécaniques.

9. Générateur selon l'une quelconque des revendications 1 à 8, dans lequel la matrice macroporeuse est un feutre polymère, formé d'une étoffe tissée ou non-tissée.

10. Générateur selon l'une quelconque des revendications 1 à 9, dans lequel le ratio diamètre moyen de pore de la matrice macroporeuse sur diamètre moyen de pore du polymère microporeux est compris entre 2 et 50.

11. Générateur selon l'une quelconque des revendications 1 à 10, présentant une porosité finale comprise entre 35 et 90%.

12. Générateur selon l'une quelconque des revendications 1 à 11 tel que le séparateur a été réalisé par un procédé de préparation comprenant les étapes suivantes:
- on élabore une solution du polymère dissous dans un solvant, éventuellement avec des additifs;
- on imprègne la matrice macroporeuse avec ladite solution;
- on immerge ladite matrice imprégnée dans un non-solvant miscible avec ledit solvant; et
- on sèche pour éliminer ledit solvant et ledit non-solvant.

13. Générateur selon l'une quelconque des revendications 1 à 11 tel que le séparateur a été réalisé par un procédé de préparation comprenant les étapes suivantes:
- on élabore une solution du polymère dissous dans un solvant, éventuellement avec des additifs, solution qui comprend de plus un non-solvant miscible avec ledit solvant, dans une proportion insuffisante pour provoquer la précipitation du polymère;
- on imprègne la matrice macroporeuse avec ladite solution; et
- on sèche pour éliminer ledit solvant et ledit non-solvant.

14. Générateur électrochimique selon l'une des revendications 1 à 13, comportant une anode comprenant du carbone et une cathode comprenant au moins un oxyde lithié de métal de transition.

15. Procédé de préparation d'un générateur selon l'une des revendications 1 à 14 comprenant le laminage des divers constituants dudit générateur fabriqués au préalable et l'imprégnation avec de l'électrolyte.

16. Procédé de préparation d'un générateur électrochimique selon l'une des revendications 1 à 14 ou fabriqué selon la revendication 15, comprenant les étapes suivantes:
- on élabore une solution de collage constituée d'une solution comprenant: un polymère, et éventuellement des additifs; un solvant dans lequel le polymère se dissout facilement à la température d'opération; et un non-solvant miscible avec ledit solvant, qui ne dissout pas ou très peu le polymère à la température d'opération, dans une proportion insuffisante pour provoquer la précipitation du polymère;
- on imprègne la matrice macroporeuse avec ladite solution;
- on met en contact cette matrice macroporeuse imprégnée et les deux électrodes pour former un couple électrochimique; et
- on sèche pour éliminer ledit solvant et ledit non-solvant.

17. Procédé de préparation selon la revendication 16, dans lequel l'étape d'imprégnation de la matrice macroporeuse est effectuée:
- en plongeant la matrice dans un bain de ladite solution;
- par enduction de la matrice sur ses deux faces avec ladite solution;
- par enduction de la matrice sur une seule face avec ladite solution.

18. Procédé de préparation d'un générateur électrochimique selon l'une des revendications 16 ou 17, comprenant les étapes suivantes:
- on élabore une solution de collage constituée d'une solution comprenant: un polymère, et éventuellement des additifs; un solvant dans lequel le polymère se dissout facilement à la température d'opération; et un non-solvant miscible avec ledit solvant, qui ne dissout pas ou très peu le polymère à la température d'opération, dans une proportion insuffisante pour provoquer la précipitation du polymère;
- on enduit la matrice macroporeuse avec ladite solution sur une ou ses deux faces;
- on met en contact cette matrice macroporeuse enduite et les deux électrodes pour former un couple électrochimique;
- on exerce une pression suffisante pour que la solution pénètre sensiblement totalement dans la matrice à partir de la ou des deux faces d'enduction; et
- on sèche pour éliminer ledit solvant et ledit non-solvant.

19. Procédé de préparation d'un générateur électrochimique selon l'une quelconque des revendications 16 à 18, dans lequel la solution de collage est à base d'un polymère choisi parmi le polyfluorure de vinylidène (PVDF), le polychlorure de vinyle (PVC), le polyméthylméthacrylate (PMMA), le polybutylméthacrylate (PBMA), le polyacrylonitrile (PAN), le polvinylformal, le polyacétate de cellulose, une polysulfone, un polyéther, une polyoléfine telle que polyéthylène (PE), polyéthylèneoxyde (PEO), polypropylène (PP), leurs copolymères, les copolymères de polyfluorure de vinylidène et de polytétrafluorure d'éthylène et les copolymères de polyfluorure de vinylidène et de polyhexafluorure d'hexène, les copolymères de polyvinylacétate et de polyvinylalcool, ainsi que leurs alliages, et les alliages du polyfluorure de vinylidène avec un polymère choisi parmi une polysulfone, le polyméthylméthacrylate et la polyvinylpyrrolidone.

20. Procédé de préparation d'un générateur électrochimique selon la revendication 19, dans lequel la solution de collage est à base de polyfluorure de vinylidène, un copolymère de celui-ci ou un alliage de celui-ci.

21. Procédé de préparation d'un générateur électrochimique selon l'une quelconque des revendications 16 à 20, dans lequel le point d'ébullition du solvant est compris entre 40 et 80°C, tandis que celui du non-solvant est supérieur à 100°C.

22. Procédé de préparation d'un générateur électrochimique selon l'une quelconque des revendications 16 à 21, dans lequel le solvant est choisi parmi acétone et tétrahydrofuranne, tandis que le non-solvant est choisi parmi le butanol, le propanol et l'éthylèneglycol.

23. Procédé de préparation d'un générateur électrochimique selon l'une quelconque des revendications 16 à 22, dans lequel la solution de collage comprend le solvant et le non-solvant en des proportions variant, en poids, de 75/25 à 90/10.

24. Procédé de préparation d'un générateur électrochimique selon l'une quelconque des revendications 16 à 23, dans lequel le polymère représente, en poids, de 10 à 25%, de la solution.

25. Procédé de préparation d'un générateur électrochimique selon l'une quelconque des revendications 16 à 24, mis en oeuvre, à l'exclusion de l'étape de séchage, à une température comprise entre 15 et 50°C.

26. Procédé de préparation d'un générateur électrochimique selon l'une quelconque des revendications 16 à 25, dans lequel l'étape de séchage est mise en oeuvre à une température comprise par exemple entre 20 et 140°C.
